(19) Europäisches Patentamt
European Patent Office
Office européen des brevets

(11) **EP 4 535 531 A1**

(12) **EUROPEAN PATENT APPLICATION**
published in accordance with Art. 153(4) EPC

(43) Date of publication:
**09.04.2025 Bulletin 2025/15**

(21) Application number: **23815139.3**

(22) Date of filing: **29.05.2023**

(51) International Patent Classification (IPC):
*H01M 50/231* (2021.01)    *H01M 50/224* (2021.01)
*H01M 50/233* (2021.01)    *H01M 50/242* (2021.01)
*H01M 50/249* (2021.01)

(52) Cooperative Patent Classification (CPC):
**H01M 50/224; H01M 50/202; H01M 50/227;
H01M 50/229; H01M 50/231; H01M 50/233;
H01M 50/236; H01M 50/242; H01M 50/249;
B60L 50/64; H01M 2220/20; Y02E 60/10**

(86) International application number:
**PCT/CN2023/096812**

(87) International publication number:
**WO 2023/231958 (07.12.2023 Gazette 2023/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.05.2022 CN 202210612018**

(71) Applicant: **BYD Company Limited
Shenzhen, Guangdong 518118 (CN)**

(72) Inventors:
• **WAN, Long**
  **Shenzhen, Guangdong 518118 (CN)**

• **LU, Zhipei**
  **Shenzhen, Guangdong 518118 (CN)**
• **PENG, Qingbo**
  **Shenzhen, Guangdong 518118 (CN)**
• **ZHU, Yan**
  **Shenzhen, Guangdong 518118 (CN)**
• **TAN, Zhijia**
  **Shenzhen, Guangdong 518118 (CN)**

(74) Representative: **Mathys & Squire
The Shard
32 London Bridge Street
London SE1 9SG (GB)**

(54) **BATTERY PACK COMPOSITE PROTECTIVE STRUCTURE AND VEHICLE**

(57)    A battery pack composite protection structure and a vehicle. The battery pack composite protection structure comprises a battery pack and a battery protection bottom plate, the battery protection bottom plate comprising a metal plate; the battery protection bottom plate is located below the battery pack, a buffer zone being formed between the battery pack and the battery protection bottom plate; the buffer zone and the metal plate satisfy the following conditions: (I), d is the thickness of the metal plate in mm; $\sigma$ is the tensile strength of the metal plate in MPa; $\varepsilon$ is the elongation at break of the metal plate; and h is the height of the buffer zone, in mm.

FIG. 1

EP 4 535 531 A1

**Description**

## CROSS-REFERENCE TO RELATED APPLICATIONS

The present disclosure claims priority to and benefits of Chinese Patent Application No. "202210612018.1", entitled "BATTERY PACK composite protection structure AND VEHICLE" and filed on May 31, 2022, which is incorporated herein by reference in its entirety.

## FIELD

The present disclosure belongs to the technical field of vehicle batteries, and specifically, relates to a battery pack composite protection structure and a vehicle.

## BACKGROUND

A battery pack of a new energy electric vehicle is generally arranged at a bottom of a vehicle. To avoid damage to the battery pack due to impact of hard objects such as stones and metals at the bottom of the vehicle, a protection structure needs to be arranged at a bottom of the battery pack.

An existing battery pack protection structure still has a problem of insufficient protective performance or high manufacturing cost, which is mainly manifested in that the battery pack protection structure is insufficient, a battery is affected by an impact vibration, and the service life is shortened under long-term vibration conditions; and cracking and surface layer damage of a protective plate are caused due to excessive amplitude of the protective plate. Requirements on the strength of the protective plate are improved, and it is difficult for a conventional steel plate to meet the requirements.

## SUMMARY

In view of a problem of insufficient protective performance of an existing battery pack protection structure, the present disclosure provides a battery pack composite protection structure and a vehicle.

To resolve the foregoing technical problem, technical solutions adopted in the present disclosure as follows:

According to an aspect, the present disclosure provides a battery pack composite protection structure, including a battery pack and a battery protection bottom plate. The battery protection bottom plate includes a metal plate. The battery protection bottom plate is arranged below the battery pack. A buffer zone is formed between the battery pack and the battery protection bottom plate. The buffer zone and the metal plate satisfy the following conditions:

$$0.018 \leq (d - 0.4)\frac{h}{\sigma * \varepsilon} \leq 0.085$$

where d is the thickness of the metal plate in mm;
$\sigma$ is the tensile strength of the metal plate in MPa;
$\varepsilon$ is the elongation at break of the metal plate; and
h is the height of the buffer zone in mm.

In some embodiments, the buffer zone and the metal plate satisfy the following condition:

$$0.022 \leq (d - 0.4)\frac{h}{\sigma * \varepsilon} \leq 0.085$$ .

In some embodiments, the thickness d of the metal plate ranges from 0.7 to 1.5 mm.

In some embodiments, the tensile strength $\sigma$ of the metal plate ranges from 590 to 1180 MPa.

In some embodiments, the elongation at break $\varepsilon$ of the metal plate ranges from 5% to 20%.

In some embodiments, the height h of the buffer zone ranges from 4 to 12 mm.

In some embodiments, the battery protection bottom plate further includes an upper fiber reinforced resin layer, a fiber reinforced resin frame, and a lower fiber reinforced resin layer. The metal plate is located between the upper fiber reinforced resin layer and the lower fiber reinforced resin layer. The metal plate is located inside the fiber reinforced resin frame. A top surface of the fiber reinforced resin frame and the upper fiber reinforced resin layer are integrally connected. A bottom surface of the fiber reinforced resin frame and the lower fiber reinforced resin layer are integrally connected.

In some embodiments, the upper fiber reinforced resin layer, the metal plate, and the lower fiber reinforced resin layer are all of square sheet-like structures. The fiber reinforced resin frame is of a sheet-like square frame structure.

In some embodiments, multiple first mounting holes are formed in an inner side of an edge of the battery protection bottom plate at intervals. The first mounting holes sequentially penetrate through the upper fiber reinforced resin layer, the fiber reinforced resin frame, and the lower fiber reinforced resin layer. Multiple second mounting holes are formed corresponding to positions of the first mounting holes in a frame at a bottom of the battery pack. Connectors penetrate between the first mounting holes and the second mounting holes.

In some embodiments, the upper fiber reinforced resin layer, the fiber reinforced resin frame, and the lower fiber reinforced resin layer are respectively and independently selected from glass fiber reinforced polyamide resin parts, glass fiber reinforced polypropylene resin parts, glass fiber reinforced polyethylene resin parts, glass fiber reinforced polycarbonate resin parts, or glass fiber reinforced polystyrene resin parts.

In some embodiments, the buffer zone is filled with a buffer layer, and the buffer layer is made of a honeycomb material or a hard foam material.

In some embodiments, the metal plate is a steel plate; and a zinc coating, a zinc-iron alloy coating, or an electrophoretic paint protection layer is arranged on an outer surface of the steel plate.

According to another aspect, the present disclosure provides a vehicle, including the battery pack composite protection structure as described above.

According to the battery pack composite protection structure provided in the present disclosure, the battery protection bottom plate is arranged below the battery pack, and meanwhile, the buffer zone is arranged between the battery pack and the battery protection bottom plate. Through a large number of experiments, the inventor found that the material of the metal plate and the height of the buffer zone of the battery protection bottom plate have significant correlation with achievement of good buffering and protective effects. Specifically, when the thickness d of the metal plate, the tensile strength $\sigma$ of the metal plate, the elongation at break $\varepsilon$ of the metal plate, and the height h of the buffer zone

$$(\mathbf{d} - 0.4)\frac{\mathbf{h}}{\sigma * \varepsilon} \leq 0.085$$

satisfy a relational expression: $0.018 \leq$                    , an impact of internal impact on the battery pack can be effectively resisted, meanwhile, the requirement that the metal plate deforms sufficiently to absorb energy without cracking can be met, and the overall impact resistance of the battery pack composite protection structure can be improved.

## BRIEF DESCRIPTION OF THE DRAWINGS

FIG. 1 is a schematic structural diagram of a battery pack composite protection structure according to an embodiment of the present disclosure.
FIG. 2 is an enlarged view of portion A in FIG. 1.
FIG. 3 is a schematic structural diagram of a battery protection bottom plate according to an embodiment of the present disclosure.
FIG. 4 is a schematic cross-sectional view of a bottom of a battery pack composite protection structure according to an embodiment of the present disclosure.
FIG. 5 is a schematic cross-sectional view of a bottom of a battery pack composite protection structure according to an embodiment of the present disclosure.
FIG. 6 is a schematic cross-sectional view of a bottom of a battery pack composite protection structure according to an embodiment of the present disclosure.
FIG. 7 is a schematic diagram of a vehicle according to an embodiment of the present disclosure.

In the drawings:

100, vehicle; 10, battery pack composite protection structure;
1, battery protection bottom plate; 11, upper fiber reinforced resin layer; 12, metal plate; 13, fiber reinforced resin frame; 14, lower fiber reinforced resin layer; 15, first mounting hole; 2, buffer layer; 3, battery pack; 31, tray; 32-second mounting hole; and 4, buffer zone.

## DETAILED DESCRIPTION

To make technical problems to be solved in the present disclosure, technical solution, and beneficial effects clearer, the present disclosure is further described in detail with reference to accompanying drawings and embodiments. It is to be understood that specific embodiments described herein are merely used to explain the present disclosure rather than limiting the present disclosure.

In the description of the present disclosure, it is to be understood that orientation or position relationships indicated by the terms such as "upper", "lower", "top", "bottom", "inner", and "outer" are based on orientation or position relationships shown in the accompanying drawings, and are only used for describing the present disclosure and simplifying the description rather than indicating or implying that the referred apparatus or element has to have a particular orientation or has to be constructed and operated in a particular orientation. Therefore, such terms cannot be construed as a limitation to the present disclosure. In the description of the present disclosure, unless otherwise specified, "multiple" means two or more.

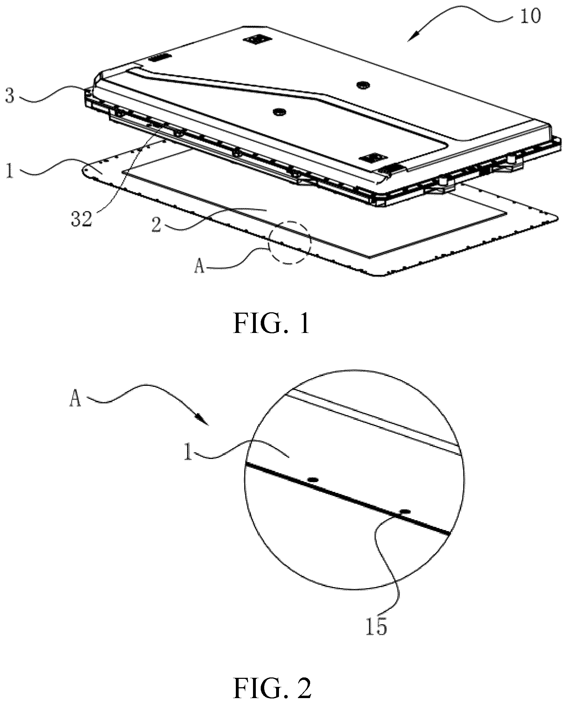

Referring to FIG. 1, FIG. 3, and FIG. 4, the present disclosure provides a battery pack composite protection structure 10, including a battery pack 3 and a battery protection bottom plate 1. The battery protection bottom plate 1 includes a metal plate 12. The battery protection bottom plate 1 is arranged below the battery pack 3. A buffer zone 4 is formed between the battery pack 3 and the battery protection bottom plate 1. The buffer zone 4 and the metal plate 12 satisfy the following conditions:

$$0.018 \leq (d - 0.4)\frac{h}{\sigma * \varepsilon} \leq 0.085$$

where d is the thickness of the metal plate 12 in mm;
$\sigma$ is the tensile strength of the metal plate 12 in MPa;
$\varepsilon$ is the elongation at break of the metal plate 12; and
h is the height of the buffer zone 4 in mm.

Through a large number of experiments, the inventor found that the material of the metal plate 12 and the height of the buffer zone 4 of the battery protection bottom plate 1 have significant correlation with achievement of good buffering and protective effects. Specifically, when the thickness d of the metal plate 12, the tensile strength $\sigma$ of the metal plate 12, the elongation at break $\varepsilon$ of the metal plate 12, and the height h of the buffer zone 4 satisfy a relational expression:

$$0.018 \leq (d - 0.4)\frac{h}{\sigma * \varepsilon} \leq 0.085$$ , an impact of internal impact on the battery pack 3 can be effectively resisted, meanwhile, the requirement that the metal plate 12 deforms sufficiently to absorb energy without cracking can be met, and the overall impact resistance of the battery pack 3 composite protection structure is improved.

In the description of the present disclosure, the "height of the buffer zone 4" refers to a maximum spacing distance between the battery protection bottom plate 1 and the battery pack 3.

In some embodiments, the battery pack 3 includes a tray 31 and a battery arranged on the tray 31.

In different embodiments, the buffer zone 4 may be arranged between the battery pack 3 and the battery protection bottom plate 1 in different manners.

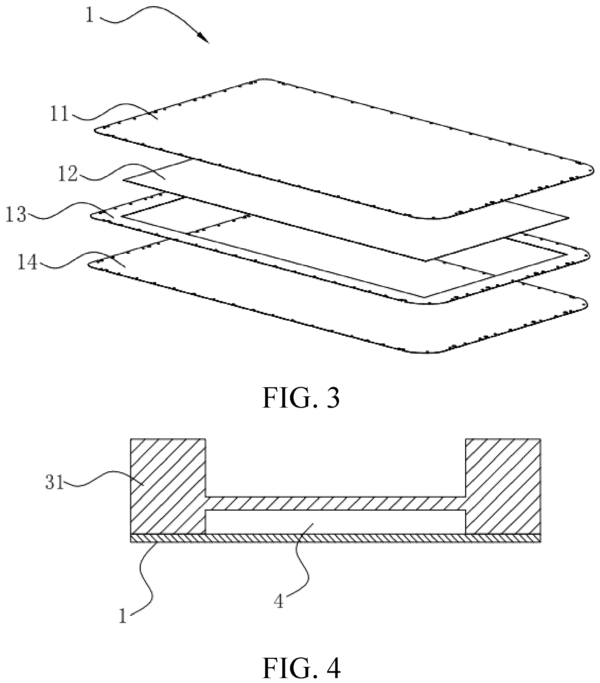

As shown in FIG. 4, in an embodiment, a groove is inwards formed in a bottom surface of the tray 31 to form the buffer zone 4. The battery protection bottom plate 1 is flat plate shaped. The battery protection bottom plate 1 covers the buffer zone 4.

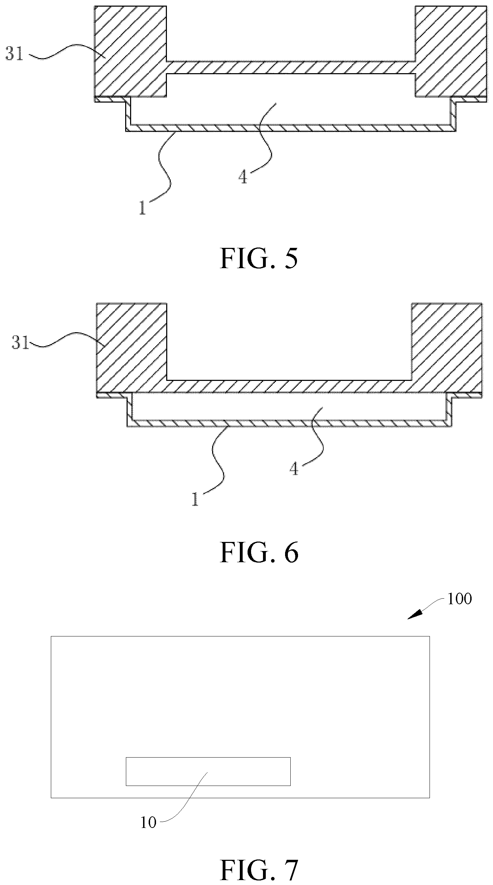

As shown in FIG. 5, in an embodiment, a frame of the battery protection bottom plate 1 is connected to the bottom surface of the tray 31. A groove is inwards formed in the bottom surface of the tray 31. The battery protection bottom plate 1 protrudes in a direction deviating from the tray 31, so as to form the buffer zone 4 between the tray 31 and the battery protection bottom plate 1.

As shown in FIG. 6, in an embodiment, a frame of the battery protection bottom plate 1 is connected to the bottom surface of the tray 31. The bottom surface of the tray 31 is a plane. The battery protection bottom plate 1 protrudes in a direction deviating from the tray 31, so as to form the buffer zone 4 between the tray 31 and the battery protection bottom plate 1.

In some embodiments, the buffer zone 4 and the metal plate 12 satisfy the following condition:

$$0.022 \leq (d - 0.4)\frac{h}{\sigma * \varepsilon} \leq 0.085.$$

The thickness d of the metal plate 12, the tensile strength $\sigma$ of the metal plate 12, the elongation at break $\varepsilon$ of the metal plate 12, and the height h of the buffer zone 4 are correlated, which can integrate impacts of material selecting of the metal plate 12 and arrangement of the buffer zone 4 on the protective performance of the battery pack 3 to a certain extent to obtain the battery pack composite protection structure 10 with excellent safety performance.

In some embodiments, the thickness d of the metal plate 12 ranges from 0.7 to 1.5 mm.

Specifically, the thickness d of the metal plate 12 may be 0.7 mm, 0.8 mm, 0.9 mm, 1.0 mm, 1.1 mm, 1.2 mm, 1.3 mm, 1.4 mm, 1.5 mm, or the like.

The thickness d of the metal plate 12 affects overall mechanical strength of the battery protection bottom plate 1. When the tensile strength and the elongation at break of the metal plate 12 are constant, the protection strength of the metal plate 12 is gradually improved with the increase of the thickness of the metal plate 12. However, the material cost of the metal plate 12 is gradually increased, a distance between the metal plate 12 and the ground is reduced, and the impact probability is increased. When the thickness d of the metal plate 12 is within the foregoing range, the overall mechanical strength of the battery protection bottom plate 1 can be ensured, which can effectively control the cost, ensure the distance from the ground, and is beneficial to lightweight control of a vehicle 100.

In some embodiments, the tensile strength $\sigma$ of the metal plate 12 ranges from 590 to 1180 MPa.

Specifically, the tensile strength $\sigma$ of the metal plate 12 may be 590 MPa, 600 MPa, 650 MPa, 700 MPa, 750 MPa, 800 MPa, 850 MPa, 900 MPa, 950 MPa, 1000 MPa, 1180 MPa, or the like.

In some embodiments, the elongation at break $\varepsilon$ of the metal plate 12 ranges from 5% to 20%.

Specifically, the elongation at break $\varepsilon$ of the metal plate 12 may be 5%, 6%, 7%, 8%, 9%, 10%, 11%, 12%, 13%, 14%, 15%, 16%, 17%, 18%, 19%, 20%, or the like.

The tensile strength $\sigma$ and the elongation at break $\varepsilon$ of the metal plate 12 may be tested through part 1: test solutions at room temperature in metallic materials-tensile testing GB/T 228.1-2010. As a part that achieves a main protective effect in the battery protection bottom plate 1, the metal plate 12 faces complex impact conditions. The tensile strength $\sigma$ of the metal plate 12, as a strength indicator of the metal plate 12, affects deformation resistance of the metal plate 12 within elastic deformation range of the metal plate 12. When the tensile strength $\sigma$ is higher, the metal plate 12 can resist higher impact without irreversible deformation. The elongation at break $\varepsilon$ affects the cracking resistance of the metal plate 12 after deformation. When the elongation at break $\varepsilon$ is higher, the metal plate 12 can resist higher impact without cracking. Generally, the higher the tensile strength $\sigma$ of the metal plate 12, the lower the elongation at break $\varepsilon$ of the metal plate 12. When the tensile strength $\sigma$ and the elongation at break $\varepsilon$ are within the foregoing range, impacts of different parameters on the protective performance of the metal plate can be effectively taken into consideration, and the impact resistance and the cracking resistance of the metal plate 12 are ensured.

In some embodiments, the height h of the buffer zone 4 ranges from 4 to 12 mm.

Specifically, the height h of the buffer zone 4 may be 4 mm, 5 mm, 6 mm, 7 mm, 8 mm, 9 mm, 10 mm, 11 mm, 12 mm, or the like.

The height h of the buffer zone 4 affects the damping performance of the battery pack 3, and meanwhile, affects a vibration range of the metal plate 12. When the height h of the buffer zone 4 is within in the foregoing range, in an aspect, the damping effect of the battery is improved; and in another aspect, problems of material layering or rivet disengagement caused by excessive amplitude of the metal plate 12 are avoided.

In an actual application process, for ensuring the impact resistance and the cracking resistance of the battery pack 3, the above four parameters are interrelated and inseparable. For example, when the thickness d of the metal plate 12 is increased, the impact resistance of the battery protection bottom plate 1 is improved. At this moment, the requirements on the tensile strength $\sigma$ of the metal plate 12, the elongation at break $\varepsilon$ of the metal plate 12, and the height h of the buffer zone 4 can be reduced correspondingly. However, correspondingly, the material cost of the battery protection bottom plate 1 is increased, and the overall weight of the vehicle 100 is increased, and the distance from the ground is shortened. When the tensile strength $\sigma$ of the metal plate 12 is increased, the impact and deformation resistance of the metal plate 12 is improved. However, the elongation at break $\varepsilon$ of the metal plate 12 is decreased correspondingly, which is prone to cracking after deformation. The requirements on the minimum thickness are different when different tensile strength $\sigma$ and different elongation at break $\varepsilon$ are selected. The elongation at break $\varepsilon$ of the metal plate 12 is increased, then the height h of the buffer zone 4 needs to be correspondingly increased to provide sufficient buffer space. When the height h of the buffer zone 4 is increased, the buffering and impact absorption effect of the buffer zone 4 on the battery pack 3 is improved, but the vibration amplitude of the metal plate 12 when impacted is increased, the requirement on the tensile strength $\sigma$ of the metal plate 12 is improved, and the distance from a bottom of the vehicle 100 to the ground is shortened. Therefore, impacts of various factors on the protective performance of the battery pack 3 are integrated through

$$0.018 \leq (d - 0.4)\frac{h}{\sigma * \varepsilon} \leq 0.085$$

a relational expression , which is beneficial to achieving a better protective effect, reducing the material cost, and ensuring a large distance from the vehicle 100 to the ground.

As shown in FIG. 3, in some embodiments, the battery protection bottom plate 1 further includes an upper fiber reinforced resin layer 11, a fiber reinforced resin frame 13, and a lower fiber reinforced resin layer 14. The metal plate 12 is located between the upper fiber reinforced resin layer 11 and the lower fiber reinforced resin layer 14. The metal plate 12 is located inside the fiber reinforced resin frame 13. A top surface of the fiber reinforced resin frame 13 and the upper fiber reinforced resin layer 11 are integrally connected. A bottom surface of the fiber reinforced resin frame 13 and the lower fiber reinforced resin layer 14 are integrally connected.

The upper fiber reinforced resin layer 11 and the lower fiber reinforced resin layer 14 are compounded on a positive surface and a negative surface of the metal plate 12. In an aspect, the upper fiber reinforced resin layer 11 and the lower fiber reinforced resin layer 14 can improve the corrosion resistance of the metal plate 12. Meanwhile, the lower fiber reinforced resin layer 14 can resist an impact of stones and the like on the bottom of the battery protection bottom plate 1 and avoid a problem of corrosion at an impact site. In another aspect, after the upper fiber reinforced resin layer 11 and the lower fiber reinforced resin layer 14 are compounded with the metal plate 12, the stiffness and strength of the metal plate 12 are effectively improved, so that the metal plate 12 has higher impact resistance.

Meanwhile, the fiber reinforced resin frame 13 is arranged around on a periphery of the metal plate 12 as a connecting transition part at frames of the upper fiber reinforced resin layer 11 and the lower fiber reinforced resin layer 14, which can effectively cancel an impact of the thickness of the metal plate 12 on a connection of frames of the upper fiber reinforced resin layer 11 and the lower fiber reinforced resin layer 14 and ensure the strength of a frame of the battery protection bottom plate 1, thereby facilitating taking the frame of the battery protection bottom plate 1 as a mounting structure of the battery protection bottom plate 1 on the battery pack 3 and improving the impact resistance of the battery protection bottom plate 1.

In some embodiments, the upper fiber reinforced resin layer 11, the metal plate 12, and the lower fiber reinforced resin layer 14 are all of square sheet-like structures. The fiber reinforced resin frame 13 is of a sheet-like square frame structure. It is to be noted that, the square sheet-like structures refer to that an overall shape is roughly square. The sheet-like square frame structure refers to that an overall shape is roughly square, and may change in a case that some detailed positions do not affect the overall shape. For example, corners of a square are set as rounded corners, or protrusions or grooves are formed in edges of the square, and a shape of the battery pack can be better matched by using the foregoing roughly square structure.

In some embodiments, shapes of the upper fiber reinforced resin layer 11 and the lower fiber reinforced resin layer 14 are consistent to ensure the connecting stability of the upper fiber reinforced resin layer 11 and the lower fiber reinforced resin layer 14.

The shapes of the upper fiber reinforced resin layer 11 and the lower fiber reinforced resin layer 14 fit the shape of the bottom of the battery pack 3. In other embodiments, when the battery pack 3 adopts other shapes, the upper fiber reinforced resin layer 11 and the lower fiber reinforced resin layer 14 may adopt other fitting shapes, such as a triangle, a pentagon, and a hexagon.

As shown in FIG. 2, multiple first mounting holes 15 are formed in an inner side of an edge of the battery protection bottom plate 1 at intervals. The first mounting holes 15 sequentially penetrate through the upper fiber reinforced resin layer 11, the fiber reinforced resin frame 13, and the lower fiber reinforced resin layer 14.

Multiple second mounting holes 32 are formed corresponding to positions of the first mounting holes 15 in a frame at a bottom of the battery pack 3. Connectors penetrate between the first mounting holes 15 and the second mounting holes 32.

The first mounting holes 15 and the second mounting holes 32 are configured to mount and fasten the battery protection bottom plate 1 to the bottom of the battery pack 3. The first mounting holes 15 are formed in an inner side of an edge of the battery protection bottom plate 1 at intervals, and sequentially penetrate through the upper fiber reinforced resin layer 11, the fiber reinforced resin frame 13, and the lower fiber reinforced resin layer 14, which can prevent the first mounting holes 15 from penetrating through the metal plate 12, and avoid a problem of corrosion caused by exposing the metal plate 12 at the first mounting holes 15. Meanwhile, the fiber reinforced resin frame 13 is beneficial to improving the overall thickness and the anti-tensile shearing strength of a mounting position, and has sufficient mounting stability.

The multiple first mounting holes 15 are formed around a periphery of the metal plate 12, so as to uniformly disperse gravity on a top and impact acting force on a bottom of the metal plate 12.

Specifically, during mounting, connectors are arranged to penetrate through the first mounting holes 15 and the second mounting holes 32 to fix the battery protection bottom plate 1 to the bottom of the battery pack 3. The connectors are rivets, screws, or bolts.

In different embodiments, resins of the upper fiber reinforced resin layer 11, the fiber reinforced resin frame 13, and the lower fiber reinforced resin layer 14 are respectively and independently selected from thermosetting and/or thermoplastic materials. Examples may include, but are limited to, epoxy resin, phenolic plastics, phenols, cyanate esters, imides (such as polyimide, Bismaleimide (BMI), and polyetherimide), polypropylenes, polyesters, benzoxazines, polybenzimidazoles, polybenzothiazoles, polyamides, polyamide imides, polysulfones, polyether sulfones, polycarbonates, polyethylene terephthalates, polyetherketones, (such as Polyetherketone (PEK), Polyether-ether-ketone (PEEK), Polyethylene Ketone Ketone (PEKK)), and the combinations thereof.

In different embodiments, fibers of the upper fiber reinforced resin layer 11, the fiber reinforced resin frame 13, and the lower fiber reinforced resin layer 14 are respectively and independently selected from glass fibers, aramid fibers, carbon fibers, graphite fibers, boron fibers, aromatic polyamide fibers, and the mixtures thereof.

The upper fiber reinforced resin layer 11, the fiber reinforced resin frame 13, and the lower fiber reinforced resin layer 14 may be embedded into the resins in forms of chopped fibers, long cut fibers, non-woven fabrics, unidirectional reinforced fiber substrates, woven fabrics, and the like.

In some embodiments, the upper fiber reinforced resin layer 11, the fiber reinforced resin frame 13, and the lower fiber reinforced resin layer 14 are respectively and independently selected from glass fiber reinforced polyamide resin parts, glass fiber reinforced polypropylene resin parts, glass fiber reinforced polyethylene resin parts, glass fiber reinforced polycarbonate resin parts, or glass fiber reinforced polystyrene resin parts.

In some embodiments, the buffer zone 4 is filled with a buffer layer 2. The buffer layer 2 is made of a honeycomb material or a hard foam material.

The honeycomb material or the hard foam material can absorb collapse deformation space of the battery protection bottom plate 1 under the action of external strong impact, buffer and absorb energy of part external strong impact, and prevent compression deformation of the battery protection bottom plate 1 from impacting to a battery core inside the battery pack 3 to further protect the battery pack 3.

In some embodiments, the honeycomb material is selected from a Polypropylene (PP) honeycomb material or an aluminum honeycomb material. The hard foam material is selected from a Polyurethane (PU) hard foam material, a Polyethylene Terephthalate (PET) hard foam material, a Polymethacrylimide (PMI) hard foam material, a Polyvinyl Chloride (PVC) hard foam material, a Polyethylene Terephthalate (PET) hard foam material, a Microcellular Polypropylene (MPP) hard foam material, a Polylactic Acid (PLA) hard foam material, a Polyimide (PI) hard foam material, or an Expanded Thermoplastic Polyurethane (ETPU) foam material.

In some embodiments, the metal plate 12 is selected from iron and alloys thereof, aluminum and alloys thereof, magnesium and alloys thereof, copper and alloys thereof, titanium and alloys thereof, and nickel and alloys thereof.

In some embodiments, the metal plate 12 is a steel plate. A zinc coating, a zinc-iron alloy coating, or an electrophoretic paint protection layer is arranged on an outer surface of the steel plate.

Compared with other metal materials, the steel plate is used as the metal plate 12, which has good tensile strength and elongation at break, can meet a requirement of impact resistance, and is beneficial to improving a protective effect on the battery pack 3.

The zinc coating, the zinc-iron alloy coating, or the electrophoretic paint protection layer is arranged on the outer surface of the steel plate, and is configured to improve the corrosion resistance of the steel plate. When the upper fiber reinforced resin layer 11 or the lower fiber reinforced resin layer 14 is damaged, the zinc coating or the zinc-iron alloy coating will corrode prior to the steel plate due to a galvanic effect achieved by the zinc coating or the zinc-iron alloy coating and the steel plate, so as to achieve a protective effect on the steel plate. The electrophoretic paint protection layer has good adhesion and can effectively isolate the steel plate from the external environment.

Another embodiment of the present disclosure discloses a vehicle 100, as shown in FIG. 7, including the battery pack composite protection structure 10 as described above.

The present disclosure is further described below through embodiments.

Table 1

| Samples | Thickness d of metal plate/mm | Tensile strength $\sigma$ of metal plate/MPa | Elongation at break $\varepsilon$ of metal plate | Height h of buffer zone/mm | (d-4) *h/($\sigma$*$\varepsilon$) |
|---|---|---|---|---|---|
| Embodiment 1 | 1.2 | 780 | 15% | 12 | 0.082 |
| Embodiment 2 | 1.2 | 780 | 15% | 8 | 0.055 |
| Embodiment 3 | 1.2 | 780 | 15% | 4 | 0.027 |
| Embodiment 4 | 1 | 780 | 15% | 10 | 0.051 |
| Embodiment 5 | 1 | 780 | 15% | 8 | 0.041 |
| Embodiment 6 | 1 | 780 | 15% | 6 | 0.031 |
| Embodiment 7 | 0.8 | 780 | 15% | 10 | 0.034 |
| Embodiment 8 | 0.8 | 780 | 15% | 8 | 0.027 |
| Embodiment 9 | 1.5 | 590 | 20% | 8 | 0.075 |
| Embodiment 10 | 1.5 | 590 | 20% | 6 | 0.056 |
| Embodiment 11 | 1.5 | 590 | 20% | 4 | 0.037 |
| Embodiment 12 | 1.2 | 590 | 20% | 10 | 0.068 |
| Embodiment 13 | 1.2 | 590 | 20% | 8 | 0.054 |
| Embodiment 14 | 1 | 590 | 20% | 8 | 0.041 |

(continued)

| Samples | Thickness d of metal plate/mm | Tensile strength σ of metal plate/MPa | Elongation at break ε of metal plate | Height h of buffer zone/mm | (d-4)*h/(σ*ε) |
|---|---|---|---|---|---|
| Embodiment 15 | 0.7 | 590 | 20% | 10 | 0.025 |
| Embodiment 16 | 1.5 | 1180 | 6% | 5 | 0.078 |
| Embodiment 17 | 1.5 | 1180 | 6% | 4 | 0.062 |
| Embodiment 18 | 1.2 | 1180 | 6% | 4 | 0.045 |
| Embodiment 19 | 1.2 | 780 | 15% | 3 | 0.021 |
| Embodiment 20 | 1 | 780 | 15% |  | 0.021 |
| Embodiment 21 | 0.8 | 780 | 15% | 6 | 0.021 |
| Embodiment 22 | 1.2 | 480 | 22% | 8 | 0.061 |
| Embodiment 23 | 0.6 | 780 | 15% | 12 | 0.021 |
| Embodiment 24 | 1.5 | 590 | 20% | 3 | 0.028 |
| Embodiment 25 | 0.7 | 590 | 20% | 14 | 0.036 |
| Comparative example 1 | 0.8 | 780 | 15% | 4 | 0.014 |
| Comparative example 2 | 0.7 | 590 | 20% | 6 | 0.015 |
| Comparative example 3 | 1.2 | 500 | 12% | 12 | 0.160 |

Embodiment 1

The present embodiment is used for describing the battery pack composite protection structure disclosed by the present disclosure, which includes a battery pack, a buffer layer, and a battery protection bottom plate. The battery protection bottom plate includes a metal plate, an upper fiber reinforced resin layer, a fiber reinforced resin frame, and a lower fiber reinforced resin layer. The metal plate is a zinc coated steel plate. The metal plate is located between the upper fiber reinforced resin layer and the lower fiber reinforced resin layer. The metal plate is located inside the fiber reinforced resin frame. A top surface of the fiber reinforced resin frame and the upper fiber reinforced resin layer are integrally connected. A bottom surface of the fiber reinforced resin frame and the lower fiber reinforced resin layer are integrally connected. The battery protection bottom plate is arranged below the battery pack. A buffer zone is formed between the battery pack and the battery protection bottom plate. The buffer zone is filled with the buffer layer. Multiple first mounting holes are formed in overlap positions of the upper fiber reinforced resin layer, the fiber reinforced resin frame, and the lower fiber reinforced resin layer. Multiple second mounting holes are formed corresponding to positions of the first mounting holes in a frame at a bottom of the battery pack. The first mounting holes and the second mounting holes are connected through rivets.

The thickness d of the metal plate is 1.2 mm, the tensile strength σ of the metal plate is 780 MPa, the elongation at break ε of the metal plate is 15%, and the height h of the buffer zone is 12 mm.

Embodiments 2 to 25

Embodiments 2 to 25 are used for describing the battery pack composite protection structure disclosed by the present disclosure, which includes most structures in Embodiment 1. The difference is that:

The steel plate and the height of the buffer zone provided in Embodiments 2 to 25 in Table 1 are adopted.

Comparative examples 1 to 3

Comparative examples 1 to 3 are used for comparing to describe the battery pack composite protection structure disclosed by the present disclosure, which includes most structures in Embodiment 1. The difference is that:

The steel plate and the height of the buffer zone provided in the Comparative examples 1 to 3 in Table 1 are adopted.

Performance test

The following performance test was performed on the battery pack composite protection structures provided in the foregoing embodiments and the comparative examples.

A sphere was used as an impact head to impact the battery protection bottom plate of the battery pack composite protection structure to simulate a working condition that a bottom of an overall vehicle was collided by a foreign object. The sphere was defined with a diameter of 25 mm and gravity of 10 kg. Impact energy was 300 J, and an impact speed was 8.5 m/s. Five impacts were performed by taking a center point of the battery protection bottom plate and four points around the center point as impact points.

Concave deformation amounts of a tray of the battery pack at various impact point were measured. The impact point with the maximum concave deformation amount was selected was recorded as the concave deformation amount of the tray of the battery pack. Generally, the concave amount impacted by the energy of 300 J is required not to be greater than 3 mm.

Whether the battery protection bottom plate was damaged after impact was recorded.

Obtained test results are filled in Table 2.

Table 2

| Samples | Concave deformation amount of tray of battery pack/mm | Whether the protection bottom plate is damaged by impact |
|---|---|---|
| Embodiment 1 | 2.2 | No |
| Embodiment 2 | 2.4 | No |
| Embodiment 3 | 2.7 | No |
| Embodiment 4 | 2.3 | No |
| Embodiment 5 | 2.5 | No |
| Embodiment 6 | 2.7 | No |
| Embodiment 7 | 2.6 | No |
| Embodiment 8 | 2.8 | No |
| Embodiment 9 | 2.3 | No |
| Embodiment 10 | 2.5 | No |
| Embodiment 11 | 2.7 | No |
| Embodiment 12 | 2.1 | No |
| Embodiment 13 | 2.4 | No |
| Embodiment 14 | 2.5 | No |
| Embodiment 15 | 2.7 | No |
| Embodiment 16 | 2.0 | No |
| Embodiment 17 | 2.4 | No |
| Embodiment 18 | 2.7 | No |
| Embodiment 19 | 2.9 | No |
| Embodiment 20 | 2.9 | No |
| Embodiment 21 | 3.0 | No |
| Embodiment 22 | 2.8 | No |
| Embodiment 23 | 3 | No |
| Embodiment 24 | 3 | No |
| Embodiment 25 | 2.9 | No |
| Comparative example 1 | 4 | Yes |
| Comparative example 2 | 3.7 | Yes |

(continued)

| Samples | Concave deformation amount of tray of battery pack/mm | Whether the protection bottom plate is damaged by impact |
|---|---|---|
| Comparative example 3 | 1.6 | Yes |

It can be learned from test results in Table 2 that the thickness d of the metal plate, the tensile strength σ of the metal plate, the elongation at break ε of the metal plate, and the height h of the buffer zone in the battery pack composite protection structure have correlation with one another. When a relational expression

$$0.018 \leq (d - 0.4)\frac{h}{\sigma * \varepsilon} \leq 0.085$$ is satisfied, the impact resistance of the obtained battery pack composite protection structure is greatly improved. When the thickness d of the metal plate, the tensile strength σ of the metal plate, the elongation at break ε of the metal plate, and the height h of the buffer zone exceed this range, the performance cannot meet a requirement or cost redundantly is increased.

The above are merely preferred embodiments of the present disclosure and are not intended to limit the present disclosure. Any modification, equivalent replacement, improvement and the like made within the spirit and principle of the present disclosure all fall within the scope of protection of the present disclosure.

**Claims**

1. A battery pack composite protection structure (10), comprising a battery pack (3) and a battery protection bottom plate (1), the battery protection bottom plate (1) comprising a metal plate (12); the battery protection bottom plate (1) being arranged below the battery pack (3), a buffer zone (4) being formed between the battery pack (3) and the battery protection bottom plate (1), the buffer zone (4) and the metal plate (12) satisfying the following condition:

$$0.018 \leq (d - 0.4)\frac{h}{\sigma * \varepsilon} \leq 0.085$$

   wherein d is the thickness of the metal plate (12) in mm; σ is the tensile strength of the metal plate (12) in MPa; ε is the elongation at break of the metal plate (12); and h is the height of the buffer zone (4) in mm.

2. The battery pack composite protection structure (10) according to claim 1, wherein the buffer zone (4) and the metal plate (12) satisfy the following condition:

$$0.022 \leq (d - 0.4)\frac{h}{\sigma * \varepsilon} \leq 0.085.$$

3. The battery pack composite protection structure (10) according to claim 1 or 2, wherein the thickness d of the metal plate (12) ranges from 0.7 to 1.5 mm.

4. The battery pack composite protection structure (10) according to any one of claims 1 to 3, wherein the tensile strength σ of the metal plate (12) ranges from 590 to 1180 MPa.

5. The battery pack composite protection structure (10) according to any one of claims 1 to 4, wherein the elongation at break ε of the metal plate (12) ranges from 5% to 20%.

6. The battery pack composite protection structure (10) according to any one of claims 1 to 5, wherein the height h of the buffer zone (4) ranges from 4 to 12 mm.

7. The battery pack composite protection structure (10) according to any one of claims 1 to 6, wherein the battery protection bottom plate (1) further comprises an upper fiber reinforced resin layer (11), a fiber reinforced resin frame (13), and a lower fiber reinforced resin layer (14); the metal plate (12) is located between the upper fiber reinforced resin layer (11) and the lower fiber reinforced resin layer (14); the metal plate (12) is located inside the fiber reinforced resin frame (13); a top surface of the fiber reinforced resin frame (13) and the upper fiber reinforced resin layer (11) are integrally connected; and a bottom surface of the fiber reinforced resin frame (13) and the lower fiber reinforced resin layer (14) are integrally connected.

8. The battery pack composite protection structure (10) according to claim 7, wherein the upper fiber reinforced resin layer (11), the metal plate (12), and the lower fiber reinforced resin layer (14) are all of square sheet-like structures; and the fiber reinforced resin frame (13) is of a sheet-like square frame structure.

9. The battery pack composite protection structure (10) according to claim 7 or 8, wherein a plurality of first mounting holes (15) are formed in an inner side of an edge of the battery protection bottom plate (1) at intervals; the first mounting holes (15) sequentially penetrate through the upper fiber reinforced resin layer (11), the fiber reinforced resin frame (13), and the lower fiber reinforced resin layer (14); a plurality of second mounting holes (32) are formed corresponding to positions of the first mounting holes (15) in a frame at a bottom of the battery pack (3); and connectors penetrate between the first mounting holes (15) and the second mounting holes (32).

10. The battery pack composite protection structure (10) according to any one of claims 7 to 9, wherein the upper fiber reinforced resin layer (11), the fiber reinforced resin frame (13), and the lower fiber reinforced resin layer (14) are respectively and independently selected from glass fiber reinforced polyamide resin parts, glass fiber reinforced polypropylene resin parts, glass fiber reinforced polyethylene resin parts, glass fiber reinforced polycarbonate resin parts, or glass fiber reinforced polystyrene resin parts.

11. The battery pack composite protection structure (10) according to any one of claims 1 to 10, wherein the buffer zone (4) is filled with a buffer layer (2), and the buffer layer (2) is made of a honeycomb material or a hard foam material.

12. The battery pack composite protection structure (10) according to any one of claims 1 to 11, wherein the metal plate (12) is a steel plate; and a zinc coating, a zinc-iron alloy coating, or an electrophoretic paint protection layer is arranged on an outer surface of the steel plate.

13. A vehicle (100), comprising the battery pack composite protection structure (10) according to any one of claims 1 to 12.

FIG. 1

FIG. 2

FIG. 3

FIG. 4

**FIG. 5**

**FIG. 6**

**FIG. 7**

## INTERNATIONAL SEARCH REPORT

| | International application No. |
|---|---|
| | **PCT/CN2023/096812** |

**A. CLASSIFICATION OF SUBJECT MATTER**

H01M50/231(2021.01)i; H01M50/224(2021.01)i; H01M50/233(2021.01)i; H01M50/242(2021.01)i; H01M50/249(2021.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; WPABS; DWPI; VEN; ENTXT; CNKI: 车辆, 电池, 防护结构, 底板, 保护板, 缓冲区, 金属板, 厚度, 拉伸强度, 断裂延伸率, vehicle, battery, protective structure, floor, protective plate, buffer, metal plate, thickness, tensile strength, elongation at break

**C. DOCUMENTS CONSIDERED TO BE RELEVANT**

| Category* | Citation of document, with indication, where appropriate, of the relevant passages | Relevant to claim No. |
|---|---|---|
| PY | CN 217788608 U (BYD CO., LTD.) 11 November 2022 (2022-11-11) description, paragraphs 44-98, and figures 1-9 | 1-13 |
| PY | CN 217788632 U (BYD CO., LTD.) 11 November 2022 (2022-11-11) description, paragraphs 38-119, and figures 1-8 | 1-13 |
| Y | CN 215451600 U (BYD CO., LTD.) 07 January 2022 (2022-01-07) description, paragraphs 27-36, and figures 1-5 | 1-13 |
| Y | WO 2019034478 A1 (THYSSENKRUPP STEEL EUROPE AG et al.) 21 February 2019 (2019-02-21) description, p. 4, the last paragraph to p. 6, paragraph 2, and figures 1-2 | 1-13 |
| Y | WO 2017090676 A1 (MITSUBISHI PLASTICS INC.) 01 June 2017 (2017-06-01) description, paragraphs 29-138, and figures 1-2 | 1-13 |

☐ Further documents are listed in the continuation of Box C.    ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **31 August 2023** | **04 September 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

International application No.

**PCT/CN2023/096812**

| Patent document cited in search report | | | Publication date (day/month/year) | Patent family member(s) | | | Publication date (day/month/year) |
|---|---|---|---|---|---|---|---|
| CN | 217788608 | U | 11 November 2022 | None | | | |
| CN | 217788632 | U | 11 November 2022 | None | | | |
| CN | 215451600 | U | 07 January 2022 | None | | | |
| WO | 2019034478 | A1 | 21 February 2019 | DE | 102017214275 | B3 | 17 January 2019 |
| WO | 2017090676 | A1 | 01 June 2017 | JPWO | 2017090676 | A1 | 06 September 2018 |
| | | | | JP | 6717321 | B2 | 01 July 2020 |

Form PCT/ISA/210 (patent family annex) (July 2022)

**EP 4 535 531 A1**

**REFERENCES CITED IN THE DESCRIPTION**

**Patent documents cited in the description**

- CN 202210612018